(19) Europäisches Patentamt
European Patent Office
Office européen des brevets

(11) **EP 1 971 132 A2**

(12) **EUROPEAN PATENT APPLICATION**

(43) Date of publication:
**17.09.2008 Bulletin 2008/38**

(51) Int Cl.:
**H04N 5/21** (2006.01)

(21) Application number: **08003678.3**

(22) Date of filing: **28.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **14.03.2007 JP 2007065697**

(71) Applicant: **FUJITSU LIMITED**
**Kawasaki-shi,**
**Kanagawa 211-8588 (JP)**

(72) Inventor: **Hamano, Takashi**
**Kanagawa 211-8588 (JP)**

(74) Representative: **HOFFMANN EITLE**
**Patent- und Rechtsanwälte**
**Arabellastrasse 4**
**81925 München (DE)**

(54) **Image signal processing device, image signal processing method and image signal processing program product**

(57)     By providing an encoded image analysis unit (42) for analyzing an amount of features of images for one screen of inputted encoded image signals, a decoding/regeneration unit (11) for generating regenerative image signals by decoding the encoded image signals and a regenerative image correction unit(14) for correcting the regenerative image signals generated by the decoding /regeneration unit(11) on the basis of the amount of features analyzed by the encoded image analysis unit (42), an image signal processing device(30, 40, 100) for performing a decoding process, a correction process and the like in order to quickly follow a rapid scene change and clearly display images, its image signal processing method and its image signal processing program product can be provided.

FIG. 3

EP 1 971 132 A2

**Description**

**Background of the Invention**

**Field of the Invention**

The present invention relates to an image signal processing technology for processing encoded image signals into display image signals in order to display images clearly, and more particularly to a image signal processing device for performing a decoding process, a correction process and the like in order to clearly display encoded image signals of digital television broadcast, encoded image signals received by Internet image distribution and the like or encoded image signals recorded on a hard disk on a display panel provided for a digital television device and the like, its image signal processing method and its image signal processing program product.

**Description of the Related Art**

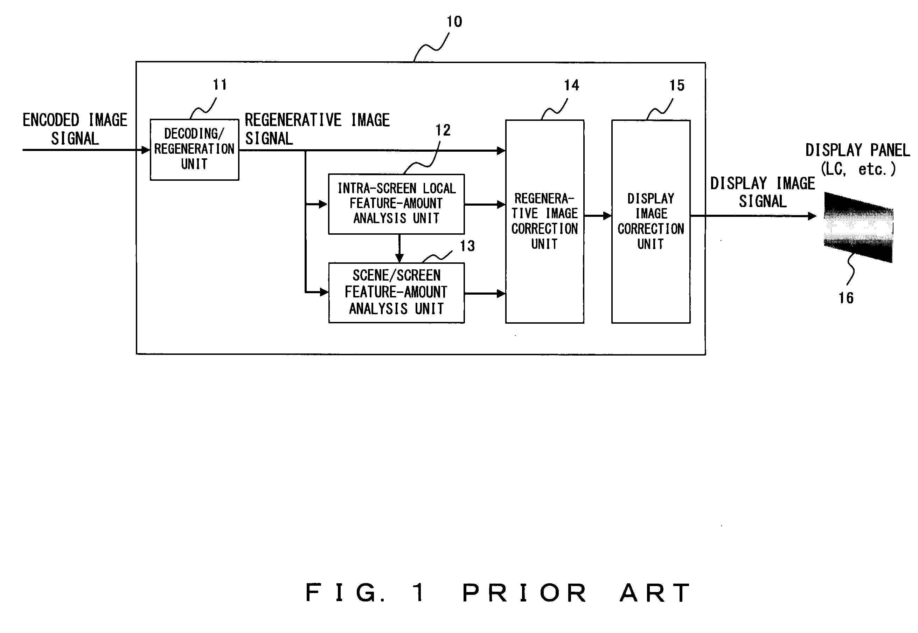

Fig. 1 shows a configuration example of a traditional image signal processing device.
In Fig. 1 a traditional image signal processing device 10 is provided for a digital television device and the like and outputs display image signals obtained by processing received encoded image signals to a display panel 16, such as an LC display device and the like. For this process, the image signal processing device 10 comprises a decoding/ regeneration unit 11, an intra-screen local feature-amount analysis unit 12, a scene/screen feature-amount analysis unit 13, a regenerative image correction unit 14 and a display image correction unit 15.
The decoding/regeneration unit 11 decodes inputted encoded image signals (for example, data encoded on the basis of an international standard system, such as MPEG or the like) into digital regenerative image signals and outputs them.
The intra-screen local feature-amount analysis unit 12 analyzes an amount of local features within one screen (for example, an amount of edges for each pixel, motion vector and the like) on the basis of regenerative image signals decoded by the decoding/regeneration unit 11 and the scene/screen feature-amount analysis unit 13 analyzes an amount of features for each scene/screen (for example, color brightness distribution, vertical/horizontal scroll, repose, scene change and the like) on the basis of the regenerative image signals decoded by the decoding/regeneration unit 11 and the amount of local features within a screen analyzed by the intra-screen local feature-amount analysis unit 12.
The regenerative image correction unit 14 performs an image correction process for realizing high image quality according to the characteristic of the regenerative image signal (for example, IP conversion, frame rate conversion, dynamic color brightness correction and the like).
The display image correction unit 15 performs an image correction process according to the panel performance and characteristic of the display panel 16 (for example, gamma correction and the like) and outputs display image signals.
Thus, the traditional image signal processing device 10 performs a process for displaying images clearly.
For example, Japanese Patent Publication No. S62-136982 discloses a technology for obtaining high image-quality regenerative images by storing correction data according to the characteristic of an input device together with image information from each image input device, also regenerating corresponding correction data when regenerating and correcting the image information.
For example, Japanese Patent Publication No.H4-261275 discloses a technology for extracting the amount of features of image data on the basis of a standard signal from an image input unit by an image output unit and outputting an image without damaging the image information from the image input unit.
However, the traditional image signal processing technology has the following problem.

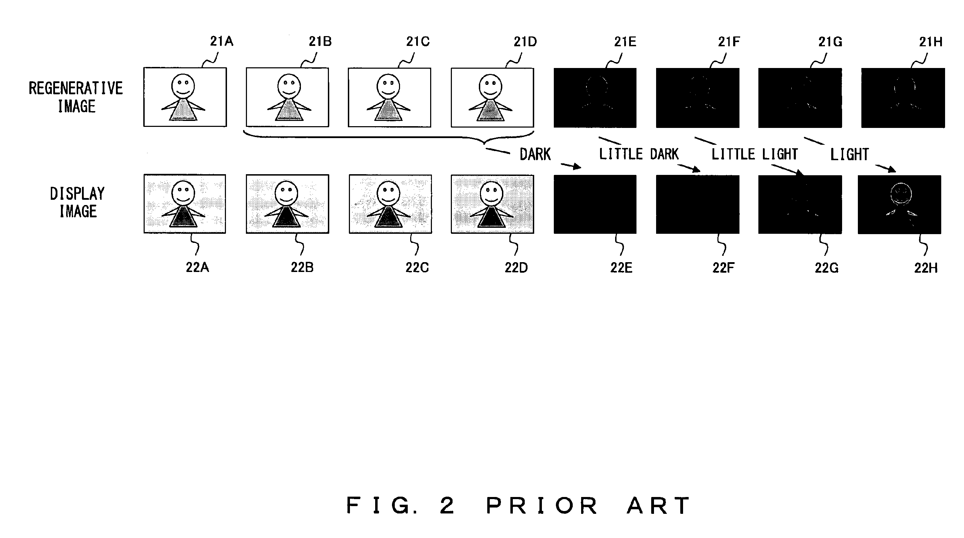

Fig. 2 shows the problem of the traditional image signal processing technology.
In Fig. 2 upper regenerative images 21A, 21B, 21C, 21D, 21E, 21F, 21G and 21H are regenerative images for one screen composed of regenerative image signals outputted by the decoding/regeneration unit 11 and they are arrayed in a time sequence from the regenerative image 21A (the left side in Fig. 2) to the regenerative image 21H (the right side in Fig. 2). Lower display images 22A, 22B, 22C, 22D, 22E, 22F, 22G and 22H are display images for one screen composed of display image signals outputted by the display image correction unit 15 and they are arrayed in a time sequence from the display image 22A (the left side in Fig. 2) to the display image 22H (the right side in Fig. 2).
Each of these display images 22A through 22H is already corrected on the basis of the amount of features of regenerative image signals for a plurality of pieces of previous regenerative images, of the regenerative images 21A through 21H. For example, the display image 22E is corrected on the basis of the amount of features of regenerative image signals for three pieces of the regenerative images 21B through 21D.
Therefore, when a scene changes rapidly due to a big difference in brightness caused, for example, when the regenerative image 21D is switched to the regenerative image 21E, a regenerative image cannot follow the change quickly. Therefore, the quality of a display image signal is deteriorated by the correction of a regenerative image signal.

Specifically, in the example shown in Fig. 2 since the regenerative images 21A through 21D are too light (high brightness), they are corrected in such a way as to become dark. Since the regenerative images 21E through 21H are too dark (low brightness), they are corrected in such a way as to become light. For example, since the display image 22E is corrected on the basis of the amount of features of the regenerative image signals of the regenerative images 21B through 21D, the dark display image 22E becomes too dark.

**Summary of the Invention**

The present invention is made in view of the above-described situation and it is an object of the present invention to provide an image signal processing device for performing a decoding process, a correction process and the like in order to follow a rapid change quickly to display an image clearly, its image signal processing method and its image signal processing program product.

The present invention adopts the following configuration in order to solve the above-described problem.

Specifically, according to one aspect of the present invention, the image signal processing device comprises an encoded image analysis unit for analyzing the amount of features of images for one screen of inputted encoded image signals, a decoding/regeneration unit for generating regenerative image signals by decoding the encoded image signals and a regenerative image correction unit for correcting the regenerative image signals generated by the decoding/regeneration unit on the basis of the amount of features analyzed by the encoded image analysis unit.

It is preferable for the image signal processing device of the present invention to further comprise an encoded image signal delay buffer for temporarily storing the encoded image signals in order to delay the input of the encoded image signals into the decoding/regeneration unit.

It is preferable for the image signal processing device of the present invention to further comprise an encoded image database for storing the encoded image signals and a reading control unit for reading encoded image signals for one screen from the encoded image database, and delaying them and outputting them to the decoding/regeneration unit and the encoded image analysis unit.

It is preferable for the encoded image analysis unit of the image signal processing device of the present invention to analyze an amount of features by variable-length decoding the encoded image signals.

It is preferable for the encoded image analysis unit of the image signal processing device of the present invention to analyze at least one of an amount of motion deviation features for each screen, an amount of color brightness distribution and an amount of features of an amount of screen change.

According to another aspect of the present invention, the image signal processing method of the present invention comprises analyzing the amount of features of images for one screen of inputted encoded image signals by the computer of the image signal processing device, generating regenerative image signals by decoding the encoded image signals and correcting the generated regenerative image signals on the basis of the analyzed amount of features.

According to another aspect of the present invention, the image signal processing program product of the present invention comprises an encoded image analysis step of analyzing the amount of features of images for one screen of inputted encoded image signals by the computer of the image signal processing device, a decoding/regeneration step of generating regenerative image signals by decoding the encoded image signals and a regenerative image correction step of correcting the generated regenerative image signals on the basis of the analyzed amount of features.

**Brief Description of the Drawings**

Fig. 1 shows a configuration example of the traditional image signal processing device.
Fig. 2 shows the problem of the traditional image signal processing technology.
Fig. 3 shows a configuration example of the image signal processing device in the first preferred embodiment of the present invention.
Fig. 4 shows a configuration example of the image signal processing device in the second preferred embodiment of the present invention.
Fig. 5 shows an example of the effect of the second preferred embodiment of the present invention.
Fig. 6 is a flowchart showing the flow of an encoded image analysis process for one screen, performed by the encoded image analysis unit 42.
Fig. 7 is a flowchart showing the flow of regenerative image correction process for one screen, performed by the regenerative image correction unit 14.
Fig. 8 shows the configuration of the decoding /regeneration unit 11.
Fig. 9 shows the configuration of the encoded image analysis unit 42.
Fig. 10 shows a configuration example of the image signal processing device in the third preferred embodiment of the present invention.

Fig.11 is a flowchart showing the flow of the reading control process of encoded image signals, performed by the reading control unit 102.

Fig. 12 shows the configuration of the image signal processing device of the present invention.

Fig. 13 shows the loading into a computer of the image signal processing program product of the present invention.

## Description of the Preferred Embodiments

The preferred embodiments of the present invention are described below with reference to the drawings.

(The first preferred embodiment)

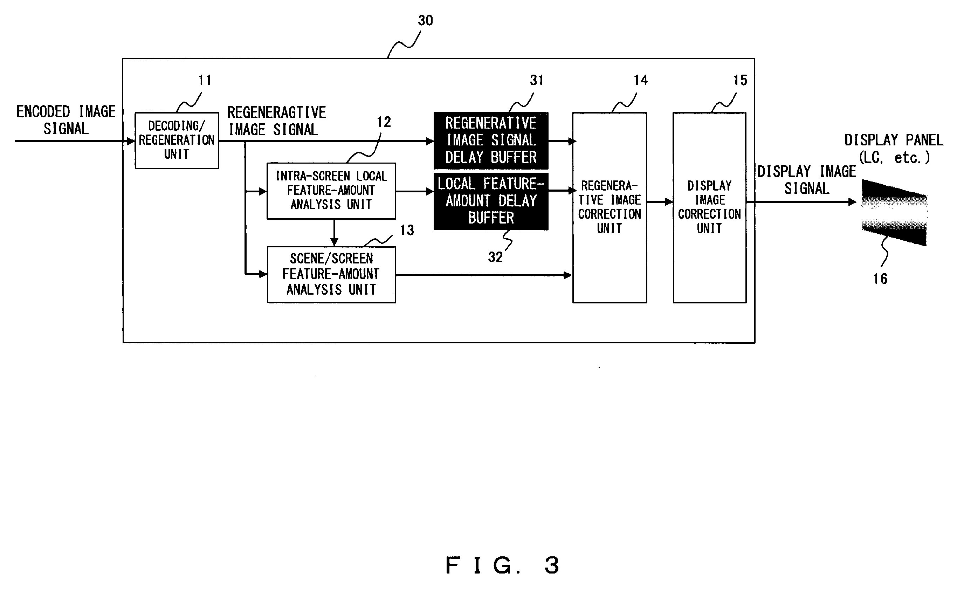

Fig. 3 shows a configuration example of the image signal processing device in the first preferred embodiment of the present invention.

In Fig. 3 the image signal processing device 30 in the first preferred embodiment of the present invention is provided for a digital television device and the like and outputs display image signals obtained by processing received encoded image signals to the display panel 16, such as an LC display device and the like. For this process the image signal processing device 30 comprises a regenerative image signal delay buffer 31 and a local feature-amount delay buffer 32 in addition to the decoding/regeneration unit 11, the intra-screen local feature-amount analysis unit 12, the scene/screen feature-amount analysis unit 13, the regenerative image correction unit 14 and the display image correction unit 15, which are provided for the traditional image signal processing device 10.

The decoding/regeneration unit 11 decodes inputted image signals encoded by MPEG or the like into digital regenerative image signals and stores them in the regenerative image signal delay buffer 31.

The intra-screen local feature-amount analysis unit 12 analyzes the amount of local features within one screen of an amount of edges for each pixel or the like, on the basis of the regenerative image signals decoded by the decoding /regeneration unit 11 and stores them in the local feature-amount delay buffer 32.

The scene/screen feature-amount analysis unit 13 analyzes the amount of features for each scene/screen, of color brightness distribution or the like, on the basis of the regenerative image signals decoded by the decoding /regeneration unit 11 and the amount of local features within a screen as in the traditional image signal processing device.

The regenerative image correction unit 14 performs an image correction process, such as IP conversion for realizing high image quality according to the characteristic of the regenerative image signal on the basis of the regenerative image signals stored in the regenerative image signal delay buffer 31, the amount of local features within a screen stored in the local feature-amount delay buffer 32 and the amount of features for each scene/screen, analyzed by the scene/screen feature-amount analysis unit 13.

The display image correction unit 15 performs an image correction process, such as gamma correction or the like according to the panel performance and characteristic of the display panel 16 as in the traditional image signal processing device.

In this way, by delaying regenerative image signals and an amount of local features within a screen using the regenerative image signal delay buffer 31 and the local feature-amount delay buffer 32 and analyzing an amount of features for each screen before the image correction process of the current screen, the image signal processing device 10 in the first preferred embodiment of the present invention can use the analysis results of future screens and cope with the rapid scene change quickly.

However, the same number of the regenerative image signal delay buffer 31 and local feature-amount delay buffer 32 for delaying regenerative image signals and an amount of local screen features, as that of screens analyzed in advance are necessary, which increases a hardware scale and costs.

(The second preferred embodiment)

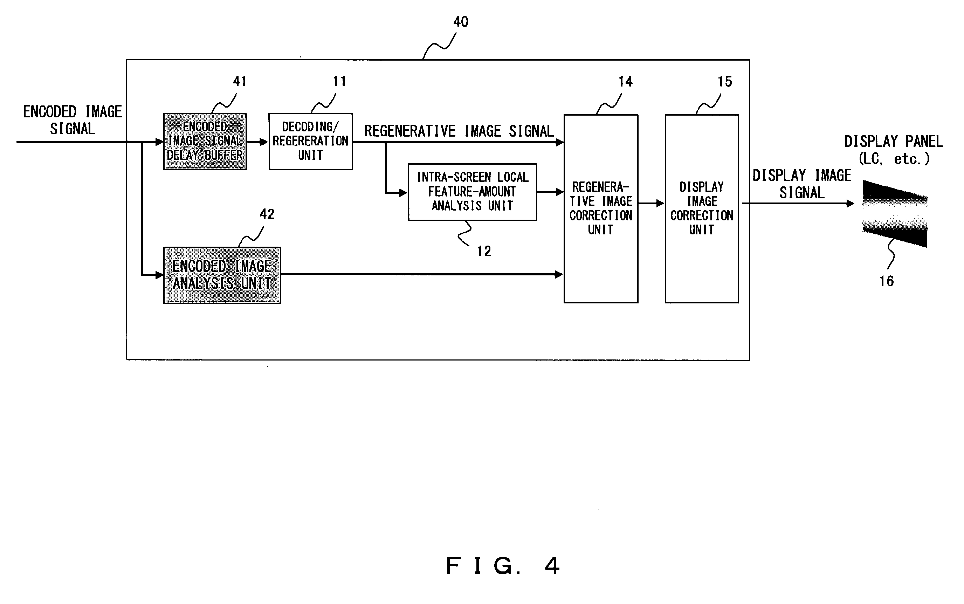

Fig. 4 shows a configuration example of the image signal processing device in the second preferred embodiment of the present invention.

In Fig. 4 the image signal processing device 40 in the second preferred embodiment of the present invention is provided for a digital television device and the like and outputs display image signals obtained by processing received encoded image signals to the display panel 16, such as an LC display device and the like. For this process the image signal processing device 40 comprises an encoded image signal delay buffer 41 and an encoded image analysis unit 42 in addition to the decoding/regeneration unit 11, the intra-screen local feature-amount analysis unit 12, the regenerative image correction unit 14 and the display image correction unit 15. Specifically, the image signal processing device 40 comprises the encoded image analysis unit 42 instead of the scene/screen feature-amount analysis unit 13 provided for the above-described image signal processing device 30 in the first preferred embodiment and comprises the encoded image signal delay buffer 41 instead of its regenerative image signal delay buffer 31 and local feature-amount delay buffer 32.

The encoded image signal delay buffer 41 delays inputted encoded image signals taking into consideration the delay of the encoded image analysis unit 42 and the decoding/regeneration unit 11. Then, the decoding/regeneration unit 11 decodes the inputted image signals that are encoded by MPEG or the like and temporarily delayed by the encoded image signal delay buffer 41 into digital regenerative image signals.

The intra-screen local feature-amount analysis unit 12 analyzes an amount of local features within one screen, such as an amount of edges for each pixel on the basis of regenerative image signals decoded by the decoding/ regeneration unit 11 as in the traditional image signal processing device.

The encoded image analysis unit 42 analyzes an amount of features for each scene/screen on the basis of encoded image signals inputted before being decoded by the decoding /regeneration unit 11.

The regenerative image correction unit 14 performs an image correction process for realizing high image quality according to the characteristic of the regenerative image signal, such as IP conversion on the basis of the regenerative image signals decoded by the decoding/regeneration unit 11, the amount of local features within a screen analyzed by the intra-screen local feature-amount analysis unit 12 and the amount of features for each scene/screen analyzed by the encoded image analysis unit 42.

Then, the display image correction unit 15 performs an image correction process according to the panel performance and characteristic of the display panel 16, such as gamma correction and the like and outputs display image signals as in the traditional image signal processing device.

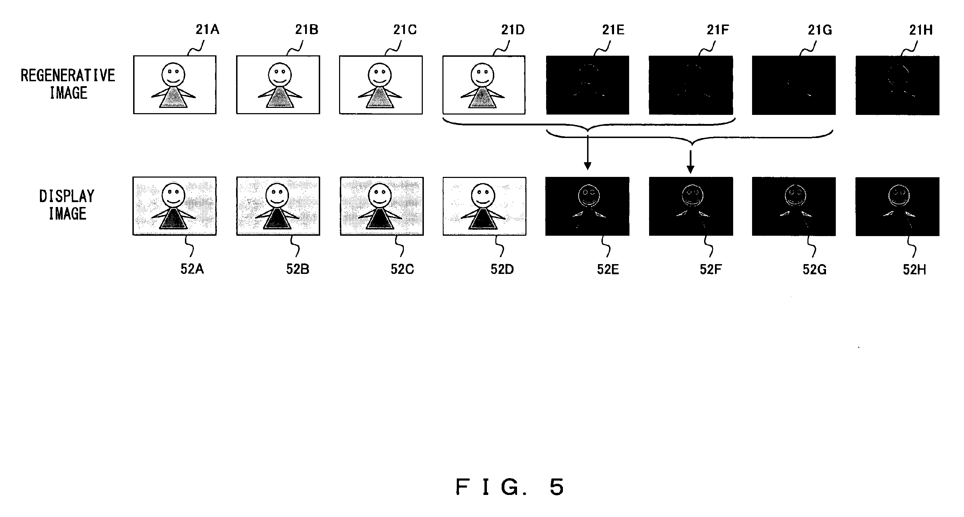

Fig. 5 shows an example of the effect of the second preferred embodiment of the present invention.

In Fig. 5 upper regenerative images 21A, 21B, 21C, 21D, 21E, 21F, 21G and 21H are regenerative images for one screen composed of regenerative image signals outputted by the decoding/regeneration unit 11 and they are arrayed in a time sequence from the regenerative image 21A (the left side in Fig. 2) to the regenerative image 21H (the right side in Fig. 2). Lower display images 52A, 52B, 52C, 52D, 52E, 52F, 52G and 52H are display images for one screen composed of display image signals outputted by the display image correction unit 15 and they are arrayed in a time sequence from the display image 52A (the left side in Fig. 2) to the display image 52H (the right side in Fig. 2). The display image 52A corresponds to the regenerative image 21A. Similarly the display images 52B through 53H correspond to the regenerative images 21B through 21H, respectively.

Each of these display images 52A through 52H is already corrected on the basis of the amount of features of regenerative image signals for a plurality of pieces of previous regenerative images, of the regenerative images 21A through 21H. For example, the display image 52E is corrected on the basis of the amount of features of regenerative image signals for three pieces of the regenerative images 21D through 21F in order to decode encoded image signals temporarily delayed by the encoded image signal delay buffer 41.

Therefore, even when a scene changes rapidly due to a big difference in brightness caused, for example, when the regenerative image 21D is switched to the regenerative image 21E, a regenerative image can follow the change quickly.

Furthermore, since data to be delayed is an encoded image signal before decoding, the capacity necessary for its realization of the encoded image signal delay buffer 41 does not widely increases.

Next, the processes of the encoded image analysis unit 42 and the regenerative image correction unit 14 in the second preferred embodiment of the present invention are described with reference to a flowchart.

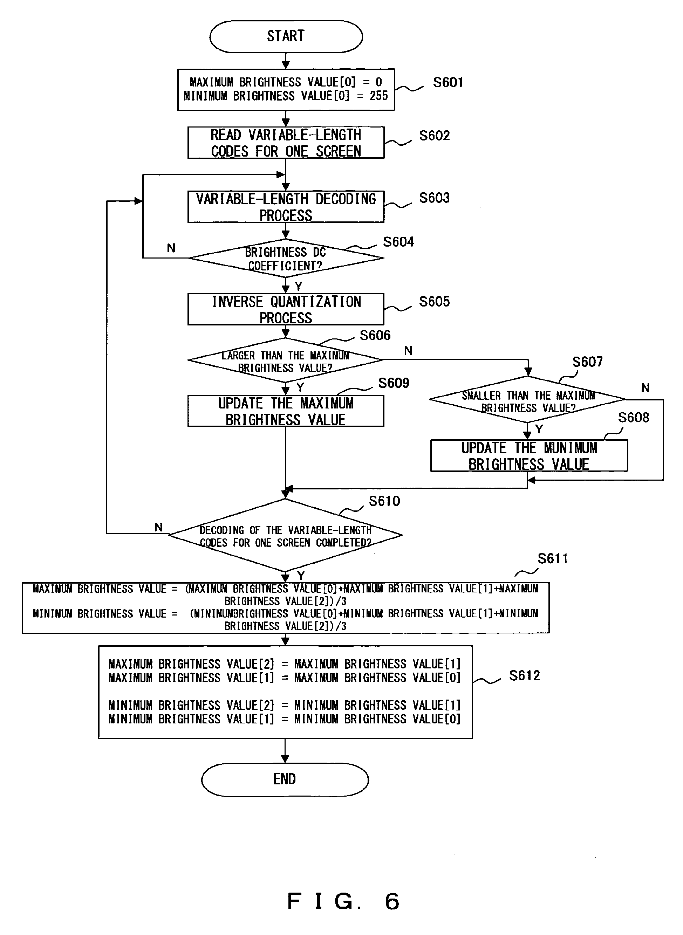

Fig. 6 is a flowchart showing the flow of an encoded image analysis process for one screen, performed by the encoded image analysis unit 42.

Firstly, in step 5601, for example, the maximum value [0] and minimum value [0] of brightness are initialized to 0 and 255, respectively.

Then, in step S602 encoded image signals (variable-length codes) for one screen are read, and in step S603 a variable-length decoding process is started.

In step S604 it is sequentially determined whether each segment of data to which the variable-length decoding process is applied in step S603 is the DC coefficient of brightness. If it is determined to be the DC coefficient (Y in step S604), in step S605 an inverse quantization process is performed.

Then, instep S606 it is determined whether a value obtained by applying the inverse quantization process in step S605 is larger than the maximum value of brightness. If it is determined to be not larger than the maximum value of brightness (N in step S606), in step S607 it is further determined whether the value obtained by applying the inverse quantization process in step S605 is smaller than the minimum value of brightness. If it is determined to be smaller than the value obtained by applying the inverse quantization process in step S605 is larger than the maximum value of brightness (Y in step S607), in step S608 the minimum value of brightness is updated.

If it is determined to be larger than the maximum value of brightness (Y in step S606), in step S609 the maximum value of brightness is updated.

Then, in step S610 it is determined whether variable-length decoding for one screen is completed. If it is determined to be completed (Y in step S610), in step S611 the average of the maximum and minimum values of brightness is calculated. For example, the maximum value of brightness is calculated as follows.

Lastly, in step S612 the maximum values [1] and [0} of brightness is assigned to the maximum values [2] and [1} of brightness, respectively, and the minimum values [1] and [0} of brightness is assigned to the minimum values [2] and [1} of brightness, respectively.

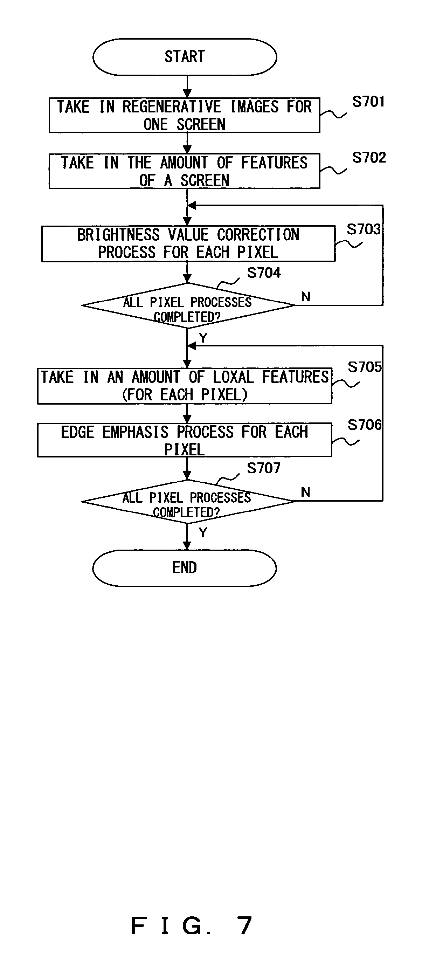

Fig. 7 is a flowchart showing the flow of regenerative image correction process for one screen, performed by the regenerative image correction unit 14.

Firstly, in step S701 regenerative image signals for one screen outputted by the decoding/regeneration unit 11 is taken in and in step S702, for example, the minimum value or maximum value of brightness or the amount of features of the screen of these the minimum and maximum values are taken in.

Then, in step S703 the brightness value correction process for each pixel is performed. For example, if a is larger than b (b>a) when brightness is 8 bits and the minimum and maximum values of brightness are a and b, respectively, the brightness after correction becomes as follows:

$$\texttt{Min(max(brightness before correction -a)} \times \texttt{256/(b-a),} \texttt{0), 255).}$$

Otherwise, it becomes as follows:

$$\texttt{Brightness after correction = brightness before correction}$$

Then, in step S704 it is determined whether the brightness value correction processes in step S703 of all pixels are completed.

If it is determined that those of all the pixels are not completed (N in step S704), steps S703 and after are repeated. If it is determined that those of all the pixels are completed (Y in step S704) , in step S705, an amount of features (for each pixel), such as the degree of flatness, the degree of steepness or the like is taken in and in step S706 an edge emphasis process for each pixel is performed.

Then, in step S710 it is determined whether the edge emphasis processes for all the pixels are completed. If it is determined that those for all the pixels are not completed (N in step S707), steps S705 and after are repeated.

(A variation of the second preferred embodiment)

Next, a variation in which the encoded image analysis unit 42 performs a part of the functions provided for the decoding/regeneration unit 11 instead of the decoding /regeneration unit 11 and an amount of features is extracted from the encoded image signal is described.

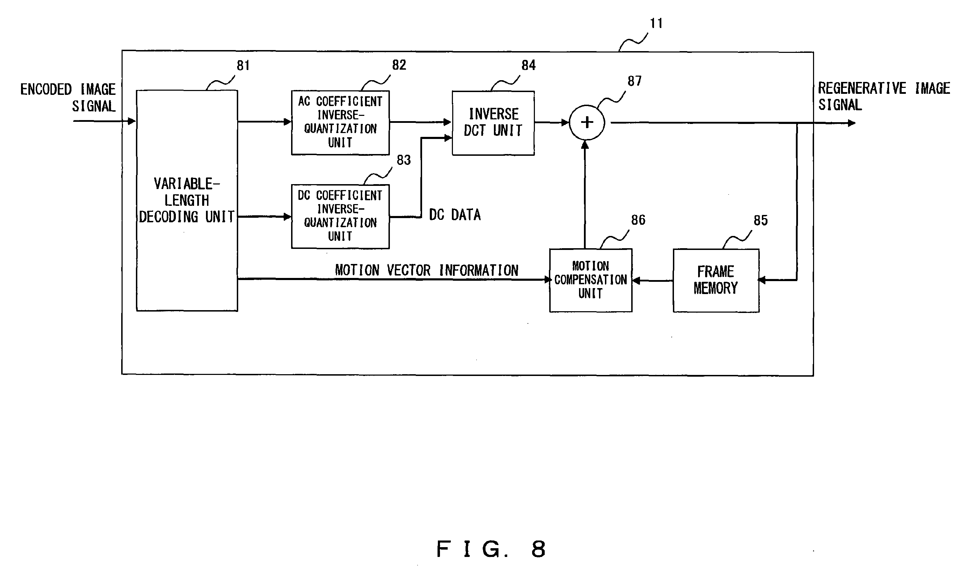

Fig. 8 shows the configuration of the decoding /regeneration unit 11.

In Fig. 8 the decoding/regeneration unit 11 comprises a variable-length decoding unit 81, an AC coefficient inverse quantization unit 82, a DC coefficient inverse quantization unit 83, an inverse DCT unit 84, frame memory 85, a motion compensation unit 86 and an adder 87.

The variable-length decoding unit 81 variable-length decodes inputted encoded image signals.

The AC coefficient inverse quantization unit 82 inversely quantizes the quantization AC coefficient of data variable-length decoded by the variable-length decoding unit 81 and the DC coefficient inverse quantization unit 83 inversely quantizes the quantization DC coefficient of data variable-length decoded by the variable-length decoding unit 81.

The inverse DCT unit 84 inversely DCT- converts data inversely quantized by the AC coefficient inverse quantization unit 82 and the DC coefficient inverse quantization unit 83.

The motion compensation unit 86 generates predicted image data of the current frame from frame data stored in the frame memory 85 on the basis of the motion vector information of the data variable-length decoded by the variable-length decoding unit 81.

Then, the adder 87 outputs regenerative image signals by adding the predicted image data generated by the motion compensation unit 86 and the data inversely DCT-converted by the inverse DCT unit 84.

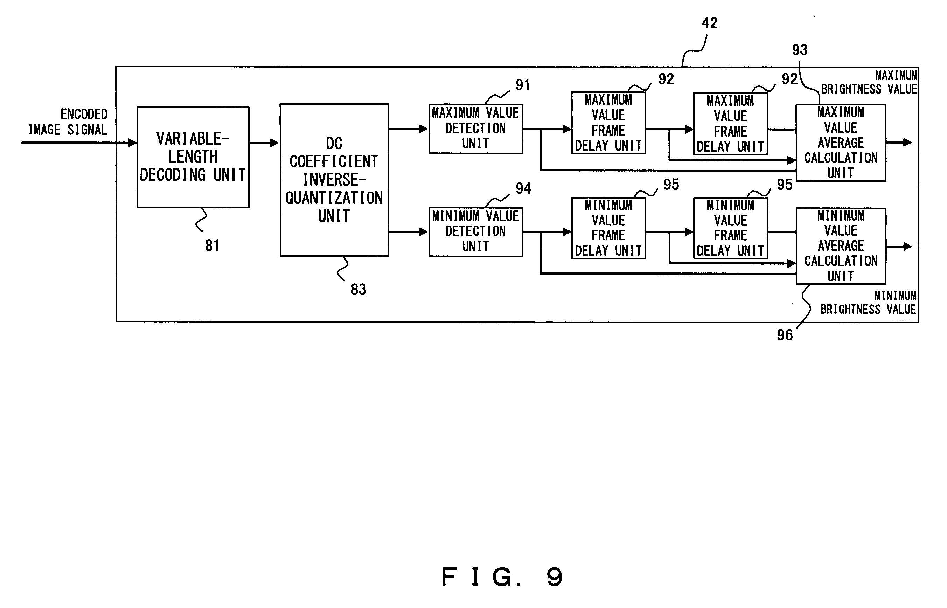

Fig. 9 shows the configuration of the encoded image analysis unit 42.

The encoded image analysis unit 42 performs only a variable-length decoding process for extracting an amount of features necessary for the correction of a regenerative image from encoded image signals and outputs a motion vector for each encoding block, a DC coefficient for each block of an intra-frame encoding screen or the differential value of the DC coefficient for each block of an inter-frame encoding screen and the like.

Then, the deviation of the motion of the whole screen is detected from the dispersion of the outputted motion vector and the like as the amount of features of the motion of the whole screen, such as repose, vertical/horizontal scroll and the like.

The generation distribution (the maximum value, minimum value and their average of brightness) of the whole screen and the like is detected from the outputted DC coefficient. In this case, as shown in Fig. 8, the encoded image analysis unit 42 comprises the variable-length decoding unit 81 and DC coefficient inverse quantization unit 83 that are provided for the decoding/regeneration unit 11 shown in Fig. 8, a maximum value detection unit 91, a maximum value frame delay unit 92, a maximum value average calculation unit 93, a minimum value detection unit 94, a minimum value frame delay unit 95 and a minimum value average calculation unit 96.

An amount of features of scene change, fade or the like is detected from the outputted differential value between DC coefficients for each block due to the extreme change of a DC coefficient between frames, a uniform change of the whole screen and the like.

These detected amounts of features are used for a correction process as an amount of features for each screen by the regenerative image correction unit 14.

(The third preferred embodiment)

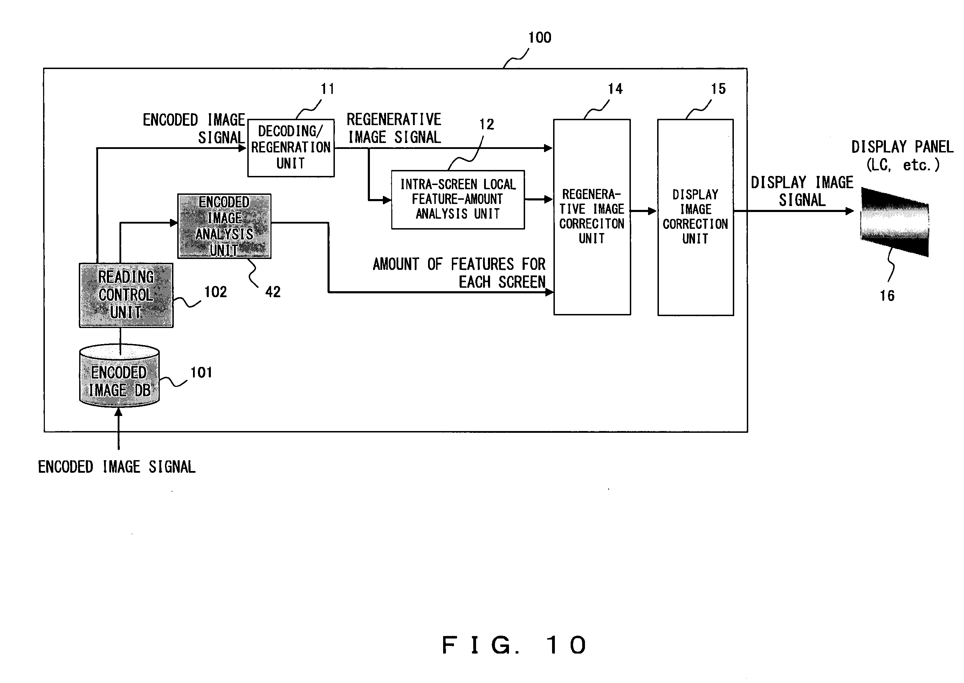

Fig. 10 shows a configuration example of the image signal processing device in the third preferred embodiment of the present invention.

In Fig. 10 the image signal processing device 100 in the third preferred embodiment of the present invention is provided for a digital television device and the like and outputs display image signals obtained by processing received encoded image signals to the display panel 16, such as an LC display device and the like. For this process the image signal processing device 100 comprises the encoded image analysis unit 42, an encoded image database (DB) 101 and a reading control unit 102 in addition to the decoding/regeneration unit 11, the intra-screen local feature-amount analysis unit 12, the regenerative image correction unit 14 and the display image correction unit 15. Specifically, the image signal processing device 100 comprises an encoded image database (DB) 101 and a reading control unit 102 instead of the encoded image signal delay buffer 41 provided for the above-described image signal processing device 40 in the second preferred embodiment.

The encoded image database (DB) 101 is a storage medium, such as a hard disk and the like and stores encoded image signals for a plurality of screens in advance. The reading control unit 102 reads encoded image signals for one screen from the encoded image database (DB) 101 and outputs them to the decoding /regeneration unit 11 and the encoded image analysis unit 42.

In this way, by reading encoded image signals from the encoded image database (DB) 101 being a storage medium in advance and in parallel instead of using the encoded image signal delay buffer 41 described with reference to Fig. 4, the same process can be realized.

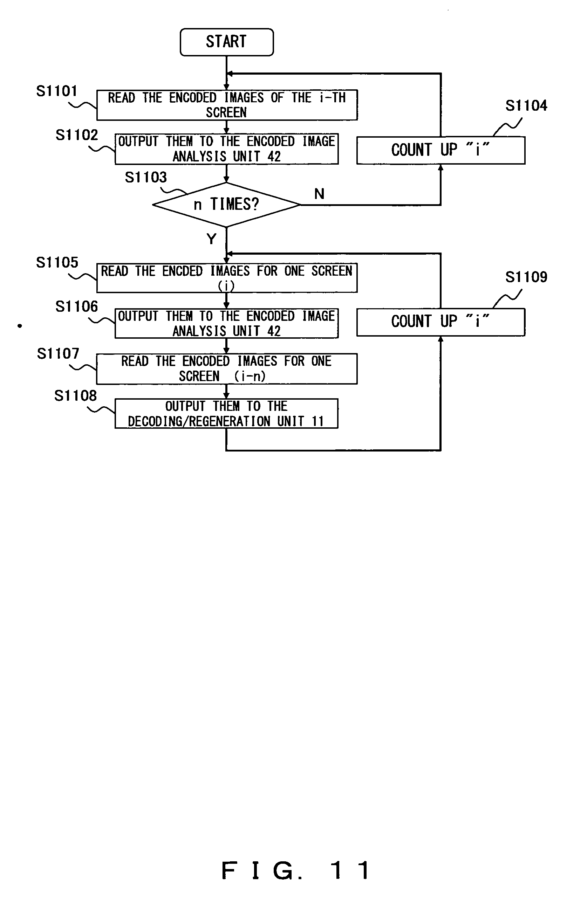

Fig.11 is a flowchart showing the flow of the reading control process of encoded image signals, performed by the reading control unit 102.

Firstly, a feature-amount analysis for each screen is started before the decoding/regeneration by the decoding /regeneration unit 11 to analyze an amount of features for a prescribed number of screens (n times).

Specifically, in step S1101 the encoded image signals of the i-th (its initial value is 1) screen are read from the encoded image database (DB) 101 and in step S1102 the encoded image signals read in step S1101 are outputted to the encoded image analysis unit 42. This process is repeated n times (step S1103 and S1104).

Then, the encoded image signals of the i-th screen for a feature-amount analysis and encoded image signals of the (i-n)th screen to be outputted to the decoding/regeneration unit 11 are read and processed in parallel.

Specifically, in step S1105 encoded image signals of the i-th screen are read from the encoded image database (DB) 101 and in step S1106 the encoded image signals read in step S1105are outputted to the encoded image analysis unit 42. Then, in step S1107 the read encoded image signals are outputted to the decoding/regeneration unit 11. This process is repeated (step S1109).

Although the preferred embodiments of the present invention have been so far described with reference to the drawings, as long as its function is implemented, the image signal processing device of the present invention is not limited to the above-described preferred embodiments and it can be a single device, a system or an integrated device which are composed of a plurality of devices, or a system in which the process is performed via a network, such as LAN, WAN or the like.

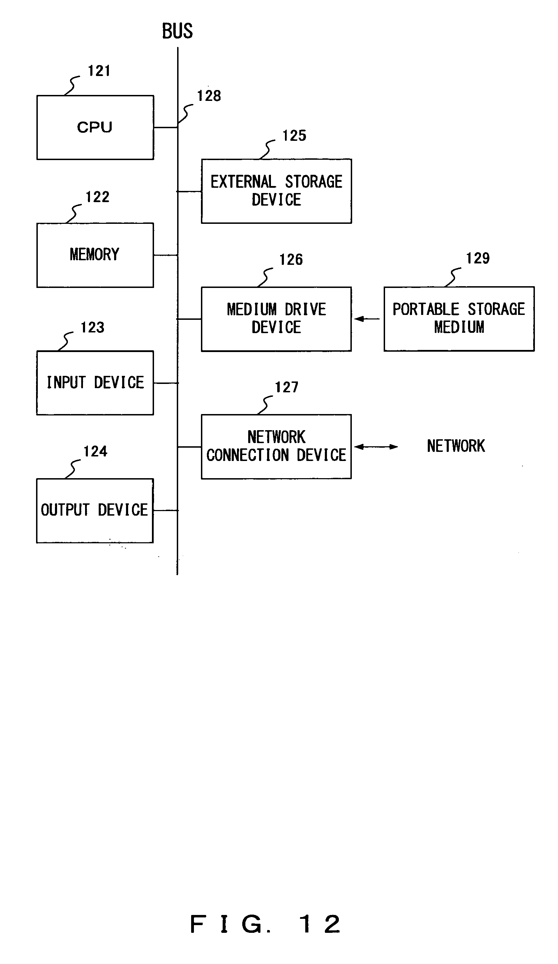

As shown in Fig. 12, it can be realized by a system comprising a CPU 121, memory 122, such as ROM, RAM, etc., an input device 124, an external storage device 125, a medium drive device 126, a portable storage medium 129 and a network connection device 127 which are all connected to a bus 128. Specifically, by providing the image signal processing device with memory 122, such as ROM, RAM, etc., an external storage device 125 or a portable storage medium 129 on which the program code of software for realizing the above-described preferred embodiment system and enabling the computer of the image signal processing device to read and execute it, it can be realized.

In this case, the program code itself read from the portable storage medium 129 or the like realizes the new function of the present invention and the portable storage medium 129 and the like on which is recorded the program code also constitutes the present invention.

For the portable storage medium 129 for supplying a program code, a flexible disk, a hard disk, an optical disk, a magneto-optical disk, CD-ROM, CD-R, DVD-ROM, DVD-RAM, a magnetic tape, a non-volatile memory card, a ROM card, various storage media on which the program code is recorded via the network connection device 127 (in other words, a communication line), such as electronic mail, personal computer communication, etc., and the like can be used.

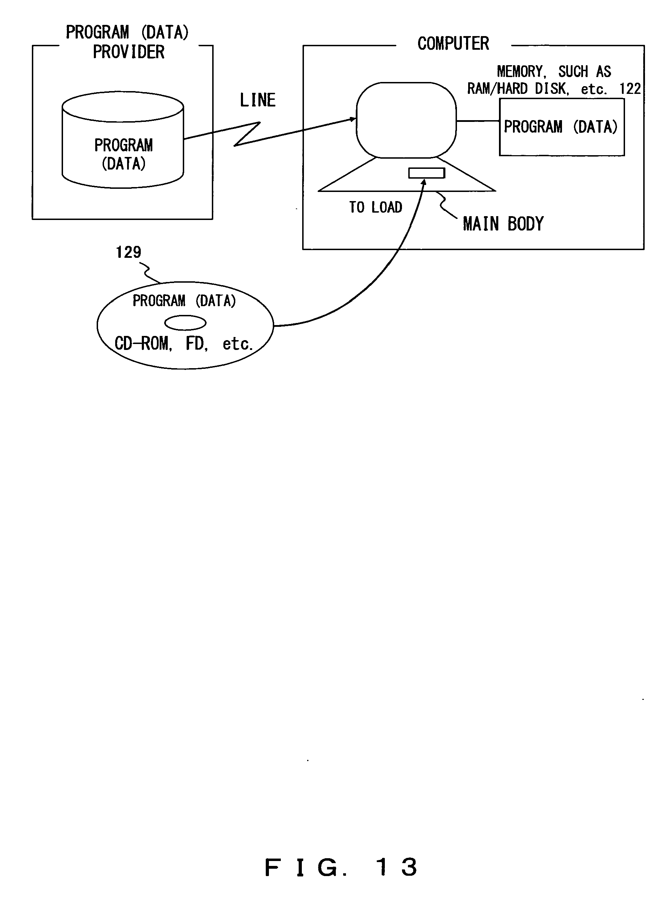

As shown in Fig. 13, by executing a program code that the computer reads on the memory 122, the function of each of the above-described preferred embodiments can be realized. Besides by enabling OS or the like operated on the computer to perform a part or all of the actual process, the function of each of the above-described preferred embodiments can be also realized.

Furthermore, by enabling the CPU 212 or the like provided for a function extension board or unit to perform a part or all of the actual process on the basis of the instruction of the program code after writing the program (data) read from the portable storage medium 129 or provided by a program (data) provider onto the memory 122 provided for the function extension board inserted in the computer or the function extension unit connected to the computer, the function of each of the above-described preferred embodiments can be also realized.

Specifically, the present invention is not limited to the above-described preferred embodiments and can take various configurations and shapes as long as the subject matter of the present invention is not deviated.

According to the present invention, by generating an amount of image features for each screen necessary for realizing high image quality from encoded image signals in advance, an amount of features of future screens can be used to correct the image of the current screen, thereby capable of quickly following the rapid change of a scene.

**Claims**

1. An image signal processing device(30, 40, 100), comprising:

    an encoded image analysis unit(42) for analyzing an amount of features of images for one screen of inputted encoded image signals;
    a decoding/regeneration unit(11) for generating regenerative image signals by decoding the encoded image signals; and
    a regenerative image correction unit(14) for correcting the regenerative image signals generated by the decoding /regeneration unit(11) on the basis of the amount of features analyzed by the encoded image analysis unit(42).

2. The image signal processing device (30, 40, 100) according to claim 1, further comprising an encoded image signal delay buffer (41) for temporarily storing the encoded image signals in order to delay input of the encoded image signals into the decoding/regeneration unit (11).

3. The image signal processing device (30, 40, 100) according to claim 1, further comprising an encoded image database(101) for storing the encoded image signals; and a reading control unit(102) for reading encoded image signals for one screen from the encoded image database (101) and delaying and outputting the encoded image signals for one screen to the decoding/regeneration unit(11) and the encoded image analysis unit(42).

4. The image signal processing device (30, 40, 100) according to claim 1, wherein the encoded image analysis unit(42) analyzes an amount of features by variable-length decoding the encoded image signals.

5. The image signal processing device (30, 40, 100) according to claim 4, wherein the encoded image analysis unit (42) analyzes at least one of an amount of motion deviation features for each screen, an amount of color brightness distribution and an amount of features of an amount of screen change.

6. An image signal processing method in which a computer of an image signal processing device(30, 40, 100) analyzing an amount of features of images for one screen of inputted encoded image signals;

generating regenerative image signals by decoding the encoded image signals; and
correcting the generated regenerative image signals on the basis of the analyzed amount of features.

7. The image signal processing method according to claim 6, wherein
the encoded image signals are temporarily stored in an encoded image signal delay buffer(41) in order to delay generation of the regenerative image signals.

8. An image signal processing program product for enabling a computer of an image signal processing device(30, 40, 100) to execute a process, the process comprising:

analyzing an amount of features of images for one screen of inputted encoded image signals (encoded image analysis step);
generating regenerative image signals by decoding the encoded image signals (decoding/regeneration step); and
correcting the generated regenerative image signals on the basis of the analyzed amount of features by the encoded image analysis step (regenerative image correction step).

FIG. 1 PRIOR ART

EP 1 971 132 A2

FIG. 2 PRIOR ART

ENCODED IMAGE
SIGNAL

DECODING/
REGENERATION
UNIT

11

REGENERAGTIVE
IMAGE SIGNAL

INTRA-SCREEN LOCAL
FEATURE-AMOUNT
ANALYSIS UNIT

12

SCENE/SCREEN
FEATURE-AMOUNT
ANALYSIS UNIT

13

REGENERATIVE
IMAGE SIGNAL
DELAY BUFFER

31

LOCAL FEATURE-
AMOUNT DELAY
BUFFER

32

REGENERA-
TIVE IMAGE
CORRECTION
UNIT

14

DISPLAY
IMAGE
CORRECTION
UNIT

15

DISPLAY IMAGE
SIGNAL

DISPLAY PANEL
(LC, etc.)

16

30

F I G.  3

EP 1 971 132 A2

40

ENCODED IMAGE
SIGNAL

41

ENCODED
IMAGE SIGNAL
DELAY BUFFER

11

DECODING/
REGERERATION
UNIT

REGENERATIVE IMAGE SIGNAL

INTRA-SCREEN LOCAL
FEATURE-AMOUNT
ANALYSIS UNIT

12

42

ENCODED IMAGE
ANALYSIS UNIT

14

REGENERA-
TIVE IMAGE
CORRECTION
UNIT

15

DISPLAY
IMAGE
CORRECTION
UNIT

DISPLAY PANEL
(LC, etc.)

DISPLAY IMAGE
SIGNAL

16

EP 1 971 132 A2

F I G. 4

REGENERATIVE IMAGE

DISPLAY IMAGE

F I G. 5

START

MAXIMUM BRIGHTNESS VALUE[0] = 0
MINIMUM BRIGHTNESS VALUE[0] = 255 — S601

READ VARIABLE-LENGTH
CODES FOR ONE SCREEN — S602

VARIABLE-LENGTH DECODING
PROCESS — S603

BRIGHTNESS DC
COEFFICIENT? — S604
N

Y

INVERSE QUANTIZATION
PROCESS — S605

LARGER THAN THE MAXIMUM
BRIGHTNESS VALUE? — S606
N

Y — S609

UPDATE THE MAXIMUM
BRIGHTNESS VALUE

S607
SMALLER THAN THE MAXIMUM
BRIGHTNESS VALUE? — N
S608
Y

UPDATE THE MUNIMUM
BRIGHTNESS VALUE

DECODING OF THE VARIABLE-LENGTH
CODES FOR ONE SCREEN COMPLETED? — S610
N

Y

S611
MAXIMUM BRIGHTNESS VALUE = (MAXIMUM BRIGHTNESS VALUE[0]+MAXIMUM BRIGHTNESS VALUE[1]+MAXIMUM BRIGHTNESS VALUE[2])/3
MINIMUM BRIGHTNESS VALUE = (MINIMUMBRIGHTNESS VALUE[0]+MINIMUM BRIGHTNESS VALUE[1]+MINIMUM BRIGHTNESS VALUE[2])/3

MAXIMUM BRIGHTNESS VALUE[2] = MAXIMUM BRIGHTNESS VALUE[1]
MAXIMUM BRIGHTNESS VALUE[1] = MAXIMUM BRIGHTNESS VALUE[0]

MINIMUM BRIGHTNESS VALUE[2] = MINIMUM BRIGHTNESS VALUE[1]
MINIMUM BRIGHTNESS VALUE[1] = MINIMUM BRIGHTNESS VALUE[0] — S612

END

F I G. 6

START

TAKE IN REGENERATIVE IMAGES FOR ONE SCREEN — S701

TAKE IN THE AMOUNT OF FEATURES OF A SCREEN — S702

BRIGHTNESS VALUE CORRECTION PROCESS FOR EACH PIXEL — S703

S704
ALL PIXEL PROCESSES COMPLETED? — N

Y

TAKE IN AN AMOUNT OF LOXAL FEATURES (FOR EACH PIXEL) — S705

EDGE EMPHASIS PROCESS FOR EACH PIXEL — S706

S707
ALL PIXEL PROCESSES COMPLETED? — N

Y

END

F I G. 7

F I G. 8

F I G. 9

EP 1 971 132 A2

100

11

ENCODED IMAGE
SIGNAL → DECODING/
REGENRATION
UNIT

REGENERATIVE
IMAGE SIGNAL

12

INTRA-SCREEN LOCAL
FEATURE-AMOUNT
ANALYSIS UNIT

14

REGENERA-
TIVE IMAGE
CORRECITON
UNIT

15

DISPLAY
IMAGE
CORRECTION
UNIT

DISPLAY IMAGE
SIGNAL

DISPLAY PANEL
(LC, etc.)

16

ENCODED
IMAGE
ANALYSIS
UNIT

102    42

READING
CONTROL
UNIT

AMOUNT OF FEATURES FOR
EACH SCREEN

ENCODED
IMAGE DB    101

ENCODED IMAGE SIGNAL

F I G.  1 0

START

S1101 — READ THE ENCODED IMAGES OF THE i-TH SCREEN

S1104 — COUNT UP "i"

S1102 — OUTPUT THEM TO THE ENCODED IMAGE ANALYSIS UNIT 42

S1103 — n TIMES? — N

Y

S1105 — READ THE ENCDED IMAGES FOR ONE SCREEN (i)

S1109 — COUNT UP "i"

S1106 — OUTPUT THEM TO THE ENCODED IMAGE ANALYSIS UNIT 42

S1107 — READ THE ENCODED IMAGES FOR ONE SCREEN (i-n)

S1108 — OUTPUT THEM TO THE DECODING/REGENERATION UNIT 11

F I G.  1 1

**BUS**

F I G.  1 2

PROGRAM (DATA)
PROVIDER

COMPUTER

LINE

MEMORY, SUCH AS
RAM/HARD DISK, etc. 122

PROGRAM
(DATA)

PROGRAM (DATA)

TO LOAD

MAIN BODY

129

PROGRAM (DATA)

CD-ROM, FD, etc.

F I G.  1 3

**EP 1 971 132 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S62136982 B
- JP H4261275 B